# EUROPÄISCHE PATENTSCHRIFT

(11) **EP 2 701 557 B1**
(45) Veröffentlichungstag und Bekanntmachung des Hinweises auf die Patenterteilung: **10.08.2016**
(21) Anmeldenummer: 12717712.9
(22) Anmeldetag: 27.04.2012
(51) Int. Cl.: A47C 20/04

(54) **ELEKTROMOTORISCHER MÖBELANTRIEB**
ELECTRIC-MOTOR FURNITURE DRIVE
ENTRAÎNEMENT DE MEUBLE ÉLECTROMOTEUR

(30) Priorität: 29.04.2011 DE 202011001008 U
(43) Veröffentlichungstag der Anmeldung: 05.03.2014
(73) Patentinhaber: DewertOkin GmbH, 32278 Kirchlengern (DE)
(72) Erfinder: HILLE, Armin, 33659 Bielefeld (DE)
(74) Vertreter: Dantz, Jan Henning
(86) Internationale Anmeldenummer: PCT/EP2012/057779
(87) Internationale Veröffentlichungsnummer: WO 2012/146721

(56) Entgegenhaltungen:
- EP-A1- 2 060 207
- WO-A2-2005/025024
- DE-U1-202009 005 020

## Beschreibung

Die Erfindung betrifft einen elektromotorischen Möbelantrieb, insbesondere für Sitz- und Liegemöbel gemäß dem Oberbegriff des Anspruchs 1.

Derartige elektromotorische Möbelantriebe sind in unterschiedlichen Ausführungsformen bekannt. Sie sind als Linearantriebe mit einem linear verstellbaren Abtriebsglied oder als Rotationsantriebe mit einem rotierenden Abtriebsglied ausgebildet und haben sich in der Praxis bestens bewährt. Die Linearantriebe weisen einen oder eine Anzahl Elektromotore auf, wobei jedem Motor ein Drehzahlreduziergetriebe und einem weiteren dem Drehzahlreduziergetriebe nachgeschaltetem Getriebe beispielsweise als letztes Getriebeglied ausgebildetes und das in Form eines Gewindespindelgetriebes nachgeschaltet ist, welches aus der Drehbewegung des Motors eine Linearbewegung des Abtriebsgliedes erzeugt. Die Rotationsantriebe weisen wenigstens einem dem jeweiligen Elektromotor nachgeschaltetes Drehzahlreduziergetriebe auf, wobei das letzte Getriebeglied das Abtriebsglied bildet. Das Abtriebsglied des jeweiligen elektromotorischen Möbelantriebs steht mit einem festen und/oder mit einem beweglichen Möbelbauteil in Verbindung, so dass bei einem Betrieb des Elektromotors die beweglichen Möbelbauteile relativ zueinander verstellt werden. Dabei kann das Möbel als Lattenrost, Arbeitstisch, Bett, Liegefläche, Behandlungsliege, Krankenhaus- bzw. Pflegebett, sowie auch als eine Hubeinrichtung für Personen wie Lifter oder Patientenlifter ausgebildet sein.

Es ist üblich, derartige elektromotorische Möbelantriebe mit einer so genannten Netzfreischaltung zu versehen, welche diese bei Nichtgebrauch mehr oder weniger vom elektrischen Versorgungsnetz trennt.

Möbel, insbesondere Sitz-/Liegemöbel, sind Möbel, welche z.B. in einer Wohnung ortsveränderlich bzw. mobil sind, d.h. sie können z.B. in einem Wohnzimmer an verschiedene Plätze verschoben bzw. platziert werden. Ein Fernsehsessel wird z.B. gern zurecht gerückt und kann je nach Tageszeit und Tageslicht innerhalb eines Raumes seinen Aufstellplatz wechseln. Dabei kann es nachteilig sein, wenn feste elektrische Anschlussverbindungen an eine Steckdose oder lange Kabel an dem Möbelantrieb angeschlossen sind. Eine Lösung dieses Problems erfolgt durch wiederaufladbare Batterieeinheiten (Akkumulatoren) am Möbel selbst. Dabei kann ein Ladegerät zur Aufladung der Batterieeinheiten verwendet werden, wenn dies benötigt wird. Das Möbel kann im Raum bewegt werden ohne störende Kabel. Die Verstellantriebe sind dann jederzeit und überall durch die Batterieeinheit mit elektrischer Energie zur Verstellung versorgbar.

Ist die Batterieeinheit entladen, so wird eine bestimmte Zeit zur Wiederaufladung durch das Ladegerät erforderlich, bis wieder eine ausreichende elektrische Leistung zur Antriebsverstellung zur Verfügung steht. Aus dem Grund sind Netzgeräte bekannt, welche nicht als Ladegerät, sondern als Stromversorgung aus dem Netz für die Verstellantriebe ausgebildet sind. Demgemäß ist dem Akkumulator eine Ladeschaltung zugeordnet, die im Idealfall im Gehäuse des Akkumulators angeordnet ist. Daraus können sich aber Nachteile ergeben.
Ändert sich der Akkumulator in seiner Bauform aus den verschiedensten Gründen, müssen Gehäuse und Ladeschaltung entsprechend angepasst werden. Am Markt sind eine Vielzahl elektrisch identischer aber auch ähnlicher Akkumulatoren verfügbar, welche jedoch wesentliche geometrische Abweichungen untereinander aufweisen. Soll ein anderer Akkumulator montiert werden, oder ändert ein zugehöriger Lieferant die geometrischen Abmessungen wesentlich, so muss ein neues Gehäuse geschaffen werden. Dies gilt auch für den Fall, wenn sich die Spezifikationen oder die Art des Akkumulators ändern, somit ein ähnlicher Akkumulator oder ein anderer Akkumulator zur Montage mit dem Möbelantrieb vorgegeben ist, auf Grund dessen sich die Ladeschaltung wesentlich ändern muss.

Stand der Technik Dokumente zu diesem Thema sind DE 202009005020U, EP 2 060 207 WO 2005025024.

Der Erfindung liegt die daher Aufgabe zugrunde, einen verbesserten elektromotorischen Möbelantrieb zu schaffen.

Die Aufgabe wird durch einen elektromotorischen Möbelantrieb mit den Merkmalen des Kennzeichens des Anspruchs 1 gelöst.

Der elektromotorische Möbelantrieb ist einfach, preiswert und leicht, insbesondere in einem beengten Bauraum wie einem Sitzmöbel, zu montieren und auch universell einsetzbar. Er besitzt als Stromversorgungseinheit eine Akkumulatoreinheit und kann mit einer Netzversorgungseinrichtung verbunden werden, die sowohl elektrische Energie zum Aufladen der Akkumulatoreinheit als auch die notwendige hohe elektrische Energie zum Betreiben des elektromotorischen Möbelantriebs bei entladenem oder teilentladenem Akkumulator liefert.

Dadurch ergibt sich ein hohes Maß an Komfort für den Benutzer, da dieser zum Aufladen des Akkumulators nichts Wesentliches berücksichtigen muss und zudem bei entladenem Akkumulator jederzeit auf die Netzversorgungseinrichtung zurückgreifen kann, um weiterhin den elektromotorischen Möbelantrieb betreiben zu können.

Demgemäß ist ein elektromotorischer Möbelantrieb, insbesondere Sitz-/Liegemöbelantrieb, mit einer Motorsteuerung, einer Handbedienung, einer Akkumulatoreinheit und mit einer Netzversorgungseinrichtung zum Verstellen von beweglichen Möbelbauteilen relativ zueinander geschaffen, wobei der elektromotorische Möbelantrieb wenigstens einen drehrichtungsumkehrbaren Elektromotor aufweist, wobei jedem Elektromotor ein Drehzahlreduziergetriebe nachgeschaltet ist und wobei jedem Drehzahlreduziergetriebe ein weiteres Getriebe nachgeschaltet ist, wobei die Akkumulatoreinheit mindestens einen Akkumulator aufweist, und wobei die Netzversorgungseinrichtung mit dem Netz verbindbar ausgebildet ist und die netzseitige Eingangsspannung in mindestens eine ausgangsseitige Kleinspannung transformiert, und einen Trenntransformator oder eine Übertragungseinheit zur galvanischen Trennung zwischen der netzgebundenen Eingangsseite und der kleinspannungsgebenden Ausgangsseite zum Betrieb des elektromotorischen Möbelantriebs und zur Aufladung des mindestens einen Akkumulators aufweist, wobei eine Kopplungsvorrichtung vorgesehen ist, welche die Akkumulatoreinheit mit der Netzversorgungseinrichtung verbindet. Der elektromotorische Möbelantrieb ist dadurch gekennzeichnet, dass die Kopplungsvorrichtung eine Ladeeinrichtung zur Aufladung des mindestens einen Akkumulators der Akkumulatoreinheit aufweist.

Die Kopplungsvorrichtung kann an einer beliebigen Stelle im Möbel angebracht werden. Dabei ist der elektromotorische Möbelantrieb unabhängig von der Gehäusegröße der Akkumulatoreinheit, da diese ebenfalls an einer anderen Stelle befestigbar ist. Zudem ist die Ladeeinrichtung in der Koppelvorrichtung angeordnet, so dass diese unabhängig von der Motorsteuerung und der Akkumulatoreinheit angeordnet ist, woraus sich eine vorteilhafte modulare und raumsparende Bauweise ergibt. Weiterhin kann bei der Montage des elektromotorischen Möbelantriebs im Möbel ein auf den jeweiligen Typ des Akkumulators ideal abgestimmte Ladeeinrichtung zugeordnet werden.

Es ist vorgesehen, dass die Kopplungsvorrichtung eine Referenzeinrichtung umfasst, welche mit der Ladeeinrichtung verbunden ist. Damit können unterschiedliche Typen von Ladeeinrichtungen verwendet werden, z.B. integrierte Ladeschaltungen.

Die Referenzeinrichtung kann mit mindestens einer Stromerfassungseinrichtung einer Akkuspannungserfassungseinrichtung und einer Ladespeisespannungserfassungseinrichtung verbunden sein. Damit kann eine angeschlossene Netzversorgungseinrichtung und die Akkumulatoreinheit mit ihren Spannungszuständen erkannt werden.

Die Referenzeinrichtung kann einen Spannungsteiler aufweisen, mit dem es in einfacher Weise, insbesondere in diskretem und damit kostengünstigem Aufbau, möglich ist, die zur Aufladung der Akkumulatoreinheit erforderlichen Parameter Spannung und Strom zu erfassen.

Ein einfacher, diskreter Aufbau kann für den Spannungsteiler mit mindestens drei in Reihe geschalteten Widerständen realisiert sein. Von diesen kann mindestens einer in einfacher Weise, z.B. mit einem Transistor oder einem anderen Schaltelement, veränderbar, z.B. überbrückbar, sein. Eine zeitweilige Veränderung, z.B. Überbrückung für eine voreinstellbare Zeit, kann in einfacher Weise durch einen Kondensator erfolgen.

In einer weiteren Ausführung kann die Ladeeinrichtung nach Art eines Schaltnetzteils ausgebildet sein. Dazu kann z.B. eine entsprechende integrierte Schaltung mit einem Schalttransistor und einer Speicherspule verwendet werden. Ferner ist es auch möglich, dass die Ladeeinrichtung eine Funktion als Hochsetzsteller aufweisen kann. Dies kann notwendig sein, wenn die Netzversorgungseinrichtung eine Ladespeisespannung liefert, die unter einer Ladeschlussspannung der Akkumulatoreinheit liegt.

So kann die Ladeeinrichtung sowohl als Tiefsetzsteller als auch als Hochsetzsteller betreibbar sein.

In einer weiteren Ausführung kann die Ladeeinrichtung als Tiefsetzsteller zur Reduzierung einer Ladespannung des mindestens einen Akkumulators der Akkumulatoreinheit, während der Ladestrom I konstant gehalten wird, betreibbar sein, und die Ladeeinrichtung kann als Hochsetzsteller mit einem konstantem Ladestrom für den mindestens einen Akkumulator der Akkumulatoreinheit bis zum Erreichen einer Ladeschlussspannung des mindestens einen Akkumulators der Akkumulatoreinheit mit konstantem Ladestrom betreibbar sein, wohingegen die Ladeeinrichtung als Hochsetzsteller mit einer konstanten Ladespannung ab Erreichen der Ladeschlussspannung des mindestens einen Akkumulators der Akkumulatoreinheit betreibbar sein kann.

In einer noch weiteren Ausführung kann die Kopplungsvorrichtung steckbare Anschlüsse zumindest für die Akkumulatoreinheit und die Netzversorgungseinrichtung aufweisen, wodurch eine große Gestaltungsfreiheit möglich ist.

In einer anderen Ausführung kann die Netzversorgungseinrichtung mit einem Schaltnetzteil ausgebildet sein.

Auch eine Ausführung der Netzversorgungseinrichtung mit einer Netzfreischaltungseinrichtung kann möglich sein, wodurch sich eine Strom- und Energieersparnis ergibt.

In einer noch weiteren Ausführung kann die Kopplungsvorrichtung die Motorsteuerung mit der Akkumulatoreinheit und der Netzversorgungseinrichtung verbinden, wodurch ein kompakter Aufbau erhalten werden kann.

Weitere Kennzeichen und Merkmale ergeben sich aus der nachfolgenden Beschreibung eines bevorzugten Ausführungsbeispiels und sind Gegenstand weiterer Unteransprüche.

Anhand der beigefügten Zeichnungen wird die Erfindung noch näher erläutert. Es zeigen:
- Figur 1: eine beispielhafte und schematische Darstellung eines als Linearantrieb ausgebildeten erfindungsgemäßen Möbelantriebs;
- Figur 2: ein schematisches Blockschaltbild eines Ausführungsbeispiels des Möbelantriebs nach Figur 1;
- Figur 3-3a: Diagramme zur Erläuterung eines Abschnitts eines Ladevorgangs; und
- Figur 4: ein schematisches Schaltbild einer Referenzeinrichtung aus Figur 2.

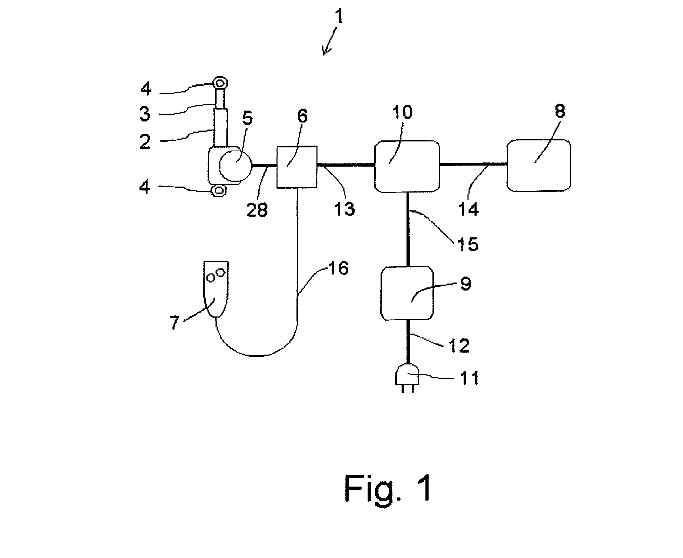

Die Figur 1 zeigt einen elektromotorischen Möbelantrieb 1 mit einer Akkumulatoreinheit 8, einer Netzversorgungseinrichtung 9 und einer Kopplungsvorrichtung 10.

Der elektromotorische Möbelantrieb 1 ist in diesem Ausführungsbeispiel ein sogenannter Linearantrieb 2, und die Netzversorgungseinrichtung 9 ist z.B. als Schaltnetzteil oder mit einem Trenntrafo, Gleichrichter und Siebschaltung ausgebildet. Der Linearantrieb 2 weist je nach Drehrichtung eines nicht näher dargestellten Elektromotors 5 ein ein- und ausfahrbares Hubrohr 3 auf, an dessen freies Ende ein Anschlussteil in Form eines Gabelkopfes 4 angebracht ist. Ein weiteres Anschlussteil in Form eines weiteren Gabelkopfes 4 ist an dem Gehäuse des Linearantriebs 2 befestigt. Das jeweilige Anschlussteil steht in nicht näher dargestellter Weise mit jeweils einem Möbelbauteil in Verbindung, so dass sich bei Betrieb des Elektromotors 5 die an dem Linearantrieb 2 angeschlossenen Möbelbauteile relativ zueinander bewegen. So ist der elektromotorische Möbelantrieb 1 z.B. in einem innerhalb einer Wohnung ortsveränderlichen Sitzmöbel, beispielsweise Ruhesessel, eingebaut. In einem solchen Sitzmöbel ist der Einbauraum begrenzt, so dass Antrieb und Stromversorgung, hier die Akkumulatoreinheit 8 und die Netzversorgungseinrichtung 9 an unterschiedlichen Stellen angeordnet werden müssen. Dabei ist die Akkumulatoreinheit 8 innerhalb oder an dem Sitzmöbel angebracht und die Netzversorgungseinrichtung 9 als Steckemetzteil oder Bodengerät außerhalb des Sitzmöbels angeordnet. Da das Sitzmöbel ortsveränderlich ist, ist eine Steckverbindung zwischen der Netzversorgungseinrichtung 9 und dem elektromotorischen Möbelantrieb 1 vorgesehen.

Der Elektromotor 5 ist an eine Motorsteuerung 6 angeschlossen, welche mit einer Handbedienung 7 in drahtgebundener Form mit einer Bedienungsleitung 16 verbunden ist. Die Handbedienung 7 weist hier zwei Drucktaster auf. Gemäß einer anderen nicht näher dargestellten Ausführungsform ist die Handbedienung 7 über eine drahtlose Übertragungsstrecke mit der Motorsteuerung 6 gekoppelt und sendet Funkwellen oder infrarote Lichtwellen zur Steuerung des wenigstens einen Elektromotors 5, d.h. Linearantriebs 2 an die Motorsteuerung 6.

Gemäß der Darstellung nach Figur 1 steht in einer ersten Ausführungsform die Handbedienung 7 mit der Motorsteuerung 6 in Verbindung, wobei die Motorsteuerung 6 als Relaissteuerung mit Relaisschaltern oder/und als Halbleiterschaltung mit Halbleiterschaltern ausgebildet ist. Die manuell betätigbaren Tastschalter der Handbedienung 7 schalten dabei den Steuerstrom der Relaisschalter bzw. der Halbleiterschalter, wobei die Leistungsschalter der Relaisschalter bzw. der Halbleiterschalter den hohen Motorstrom des Linearantriebs 2 schalten.

Gemäß der Darstellung der Figur 1 steht in einer zweiten Ausführungsform die Handbedienung 7 mit der Motorsteuerung 6 in Verbindung, welche die Versorgungsleitung 13 und eine Motorleitung 28 des Elektromotors 5 des Linearantriebs 2 und die elektrischen Leitungen 16 der manuell betätigbaren Tastschalter der Handbedienung 7 miteinander verbindet. Gemäß dieser Ausführungsform sind die Kontakte der manuell betätigbaren Tastschalter der Handbedienung 7 als Leistungsschalter ausgebildet und schalten bei Tastendruck den hohen Motorstrom des Elektromotors 5 des Linearantriebs 2. Unter einer solchen Ausführungsform einer Motorsteuerung 6 lässt sich diese auch als Energieverteilung und/oder als Energieverzweigung verstehen, welche gemäß anderen nicht näher dargestellten Ausführungsformen auch als fest umschlossener oder als fest umgossener Verteiler ausgebildet ist.

In einer weiterführenden, jedoch nicht näher dargestellten Ausführungsform, ist die Motorsteuerung 6 in dem Gehäuse des Linearantriebs 2 eingesetzt oder daran angesetzt. In einer anderen weiterführenden und ebenfalls nicht näher dargestellten Ausführungsform ist die Motorsteuerung 6 an oder in der Kopplungsvorrichtung 10 angeordnet. Der Linearantrieb 2 kann in nicht näher dargestellter Weise nach Art eines Doppelantriebes aufgebaut sein, welcher wenigstens einen Motor, jedoch vorzugsweise zwei Motoren in einem gemeinsamen Gehäuse aufnimmt. Gemäß weiteren nicht näher dargestellten Ausführungsformen weist der elektromotorische Möbelantrieb 1 eine Mehrzahl Motore auf, wobei eine Mehrzahl Linearantriebe 2 und/oder Doppelantriebe Verwendung finden können.

Die Versorgungsleitung 13 verbindet die Motorsteuerung 6 mit der Kopplungsvorrichtung 10 entweder über einen festen Leitungsanschluss oder über eine Steckverbindung.

Die Kopplungsvorrichtung 10 ist ihrerseits über eine Akkuleitung 14 mit der Akkumulatoreinheit 8 und über eine Speiseleitung 15 mit der Netzversorgungseinrichtung 9 verbunden. Diese Verbindungen können ebenfalls fest oder steckbar ausgebildet sein. Die Kopplungsvorrichtung 10 wird unten noch näher beschrieben.

Die Akkumulatoreinheit 8 weist einen Akkumulator auf, welcher zur Versorgung des Linearantriebs 5 vorgesehen ist, wenn zum Beispiel keine Netzversorgungseinrichtung 9 angeschlossen ist.

Die Netzversorgungseinrichtung 9 ist gemäß der Darstellung nach Figur 1 über ein Netzkabel 12 mit einem Netzstecker 11 verbunden, wobei in einer anderen und nicht näher dargestellten Ausführungsform der Netzstecker 11 an der Netzversorgungseinrichtung 9 angeordnet sein kann. In einer anderen Ausgestaltung kann eine Netzfreischaltungseinrichtung in der Netzversorgungseinrichtung 9 integriert sein. Es sei noch erwähnt, dass dann die Netzversorgungseinrichtung 9 gemäß der Darstellung nach Figur 1 mit einem umhüllenden Gehäuse versehen ist, so dass der Netzstecker 11 an dem Gehäuse angesetzt oder angeformt sein kann.

Der Netzstecker 11 leitet über das Netzkabel 12 die eingangsseitige Netzspannung zunächst zu der Netzversorgungseinrichtung 9, welche sekundärseitig eine Kleinspannung in Form einer Gleichspannung als Betriebsspannung abgibt und diese zunächst an die Kopplungsvorrichtung 10 leitet. Die Betriebsspannung liegt z.B. in der Höhe von etwa 29 V, wobei sie bestimmten Sicherheitsvorschriften entspricht, und dient einerseits zum Betrieb der Motorsteuerung 6 und somit des Linearantriebs 2 und andererseits zur Aufladung des Akkumulators der Akkumulatoreinheit 8.

Die Aufladung der Akkumulatoreinheit 8 erfolgt durch die Kopplungsvorrichtung 10, welche dazu eine Ladeschaltung aufweist, die unten noch näher beschrieben wird. Außerdem stellt die Kopplungsvorrichtung 10 elektrische Energie der Motorsteuerung 6 zur Verstellung des Linearantriebs 2 zur Verfügung. Dazu leitet sie entweder die elektrische Energie der Netzversorgungseinrichtung 9 oder der Akkumulatoreinheit 8 über die Versorgungsleitung 13 der Motorsteuerung 6 zu. Wird der Linearantrieb 2 nicht betrieben, so lädt die Kopplungsvorrichtung 10 den Akkumulator der Akkumulatoreinheit 8 mittels der elektrischen Energie der Netzversorgungseinrichtung 9, wenn diese angeschlossen ist.

Ist nur die Akkumulatoreinheit 8 an der Kopplungsvorrichtung 10 angeschlossen, so versorgt die Kopplungsvorrichtung 10 die Motorsteuerung mit elektrischer Energie der Akkumulatoreinheit 8. Ist die Akkumulatoreinheit 8 entladen und die Netzversorgungseinrichtung 9 angeschlossen, so wird bei Betrieb des Linearantriebs 2 dieser mit der elektrischen Energie der Netzversorgungseinrichtung 9 versorgt, ansonsten wird mit der elektrischen Energie der Netzversorgungseinrichtung 9 die Akkumulatoreinheit 8 aufgeladen.

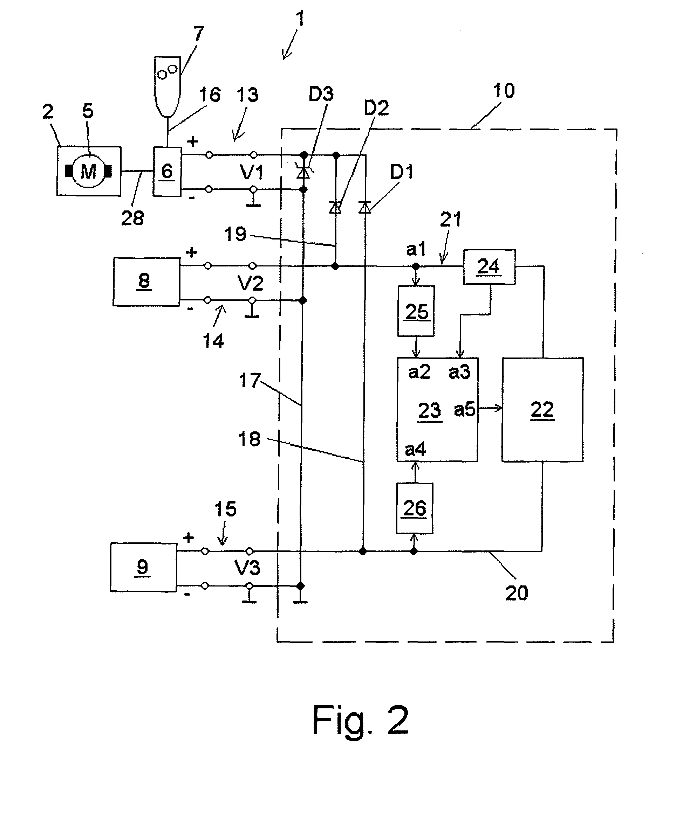

Fig. 2 zeigt ein schematisches Blockschaltbild eines Ausführungsbeispiels des Möbelantriebs 1 nach Figur 1.

Die Kopplungsvorrichtung 10 ist in diesem Ausführungsbeispiel in einem eigenen Gehäuse angeordnet und umfasst Verbindungsanschlüsse V1 bis V3 zum Anschluss der Motorsteuerung 6 mittels der Versorgungsleitung 13 am Verbindungsanschluss V1, der Akkumulatoreinheit 8 über die Akkuleitung 14 am Verbindungsanschluss V2 und der Netzversorgungseinrichtung 9 über die Speiseleitung 15 am Verbindungsanschluss V3. In der Fig. 2 ist der Zustand gezeigt, in welchem außer der Motorsteuerung 6 auch die Akkumulatoreinheit 8 und die Netzversorgungseinrichtung 9 an diesen Anschlüssen der Kopplungsvorrichtung 10 angeschlossen sind. Diese Anschlüsse können in einer Ausführung als Steckverbindungen ausgebildet sein.

Zudem weist die Kopplungsvorrichtung 10 eine Plusleitung 18 mit einer Diode D1 und eine Akkuplusleitung 19 mit einer Diode D2 auf.

Die Minusleitungen (-) der Motorsteuerung 6, der Akkumulatoreinheit 8, der Netzversorgungseinrichtung 9 und der Kopplungsvorrichtung 10 sind untereinander und mit Masse verbunden.

Die Plusleitung 18 ist mit einem Ende mit einer Plusleitung (+) der Netzversorgungseinrichtung 9 durch den Verbindungsanschluss V3 verbunden, wobei ihr anderes Ende an der Anode der Diode D1 angeschlossen ist, die wiederum mit ihrer Kathode über den Versorgungsanschluss V1 mit der Plusleitung (+) der Motorsteuerung 6 verbunden ist. Mit diesem Anschluss ist auch die Kathode der Diode D2 verbunden, deren Anode mit der Akkuplusleitung 19 der Akkumulatoreinheit 8 über den Verbindungsanschluss V2 mit der Plusleitung (+) der Akkumulatoreinheit 8 verbunden ist. Die Dioden D1 und D2 dienen zur elektrischen Entkopplung der Plusleitung 18 und der Akkuplusleitung 19.

Der Verbindungsanschluss 13 kann außerdem eine Begrenzerdiode D3 zur Absicherung gegen Spannungsspitzen aufweisen. In Fig. 2 ist die Begrenzerdiode D3 z.B. eine Schottky-Diode.

Auf diese Weise ist es möglich, dass bei angeschlossener Akkumulatoreinheit 8 (auch wenn diese einen entladenen Akkumulator aufweist) und Netzversorgungseinrichtung 9 die Netzversorgungseinrichtung 9 die Stromversorgung über Diode D1 für die Motorsteuerung 6 bildet. Ist die Netzversorgungseinrichtung 9 nicht angeschlossen (nicht dargestellt), so versorgt die Akkumulatoreinheit 8 die Motorsteuerung 6 über die Diode D2.

Weiterhin umfasst die Kopplungsvorrichtung 10 eine Ladeeinrichtung 22, eine Referenzeinrichtung 23, mindestens eine Stromerfassungseinrichtung 24, eine Akkuspannungserfassungseinrichtung 25 und eine Ladespeisespannungserfassungseinrichtung 26.

Die Ladeeinrichtung 22 dient zur Aufladung des Akkumulators der angeschlossenen Akkumulatoreinheit 8. Zum Erhalt von elektrischer Energie zum Aufladen des Akkumulators ist die Ladeeinrichtung 22 über eine Ladespeiseleitung 20 über den Verbindungsanschluss V3 mit der Plusleitung (+) der Netzversorgungseinrichtung 9 verbunden. Ein Ausgang der Ladeeinrichtung 22 ist über die mindestens eine Stromerfassungseinrichtung 24 mit einer Ladeleitung 21 verbunden, welche an die Plusleitung (+) der angeschlossenen Akkumulatoreinheit 8, d.h. am Verbindungsanschluss V2 angeschlossen ist.

Ein Aufladevorgang erfolgt anhand von Referenzwerten, die der Ladeeinrichtung 22 von der Referenzeinrichtung 23 in Abhängigkeit von einer Akkuspannung und einem Ladestrom über einen Anschluss a5 bereitgestellt werden. Der jeweilige Ladestrom wird von der mindestens einen Stromerfassungseinrichtung 24 ermittelt und der Referenzeinrichtung 23 über einen Anschluss a3 zugeleitet. Die Akkuspannungserfassungseinrichtung 25 erfasst die Akkuspannung des Akkumulators der angeschlossenen Akkumulatoreinheit 8 an einem Anschluss a1 an der Plusleitung (+) der Akkumulatoreinheit 8 und leitet sie an die Referenzeinrichtung 23 über einen Anschluss a2 weiter. Zudem ist die Referenzeinrichtung 23 über einen Anschluss a4 mit der Ladespeisespannungserfassungseinrichtung 26 verbunden, welche einen Spannungswert der Netzversorgungseinrichtung 9 erfasst.

Über die Akkuspannungserfassungseinrichtung 25, mindestens eine Stromerfassungseinrichtung 24 und Ladespeisespannungserfassungseinrichtung 26 erkennt die Referenzeinrichtung 23, ob die Akkumulatoreinheit 8 und die Netzversorgungseinrichtung 9 beide angeschlossen sind oder nur eine von ihnen. Außerdem kann sie feststellen, ob der elektromotorische Möbelantrieb 1, d.h. dessen Motorsteuerung 6 in Betrieb ist. Ein Aufladevorgang des Akkumulators erfolgt nur, wenn die Motorsteuerung 6 nicht in Betrieb ist beziehungsweise wenn alle Motore 5 nicht im Betrieb sind.

Die Ladeeinrichtung 22 weist in einer Ausführung eine integrierte Steuerschaltung auf, welche die entsprechende Ladespannung und den entsprechenden Ladestrom für die Akkumulatoreinheit 8 aus der Netzversorgungseinrichtung 9 erzeugt. Dazu ist die Ladeeinrichtung 22 mit einer Art Schaltnetzteil ausgerüstet, welches von der Steuerschaltung anhand der von der Referenzeinrichtung 23 übermittelten Werte gesteuert wird.

In einer nicht näher dargestellten Ausführung ist das Schaltnetzteil der Ladeeinrichtung als ein Sekundär-Schaltregler mit einem Schalttransistor, z.B. ein MOS-FET, und einer Induktivität ausgebildet. Dieser Sekundär-Schaltregler wird anhand eines Referenzwertes als so genannter Tiefsetzsteller in einem bestimmten Bereich betrieben. Er kann aber auch als so genannter Hochsetzsteller betrieben werden. Als Tiefsetzsteller erzeugt er eine Ladespannung für den Akkumulator, welche unter der Ausgangsspannung der Netzversorgungseinrichtung 9 liegt, und als Hochsetzsteller erzeugt er eine Ladespannung für den Akkumulator, welche über der Ausgangsspannung der Netzversorgungseinrichtung 9 liegt

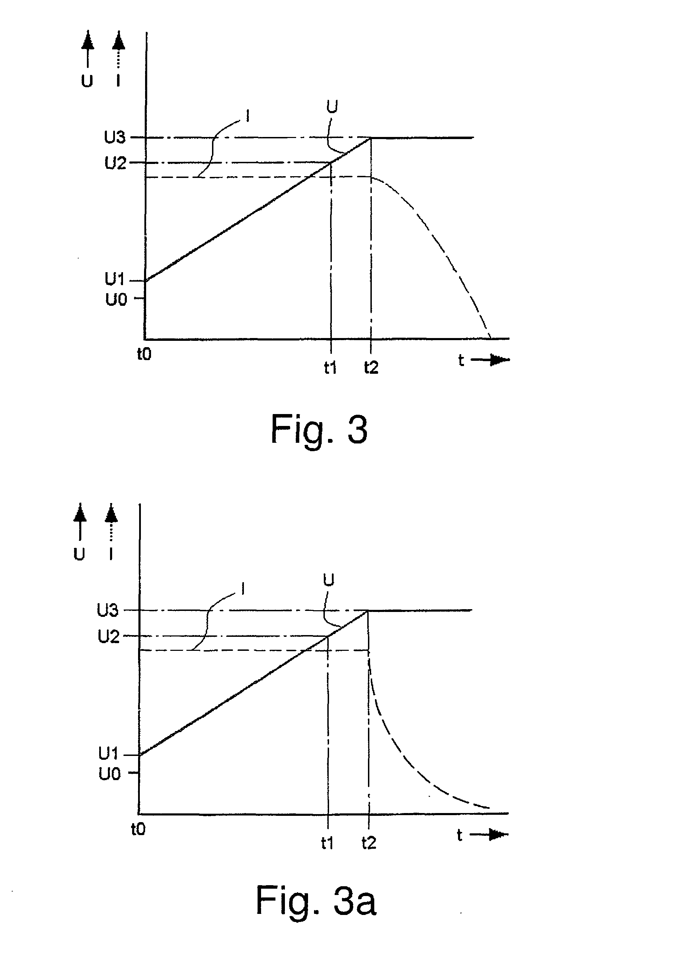

Dies soll an Beispielen im Zusammenhang mit Fig. 3 und 3a, welche Diagramme von Abschnitten eines Ladevorgangs zeigen, näher erläutert werden.

In Fig. 3 sind eine Ladespannung U und ein Ladestrom I (gestrichelt) über der Zeit t aufgetragen. Strichpunktierte Linien dienen zur Kennzeichnung von bestimmten Spannungen und Zeitpunkten.

Die Akkumulatoreinheit 8 ist zum Beispiel ein Lithium-Ionen-Akkumulator mit einer Nennspannung U2 von 25,2 V DC. Seine Ladestartspannung U1 liegt bei ca. 22 V und seine Ladeschlussspannung U3 bei 29,4 V. Die Netzversorgungseinrichtung 9 ist (gemäß entsprechender Normen) mit einer Ausgangsspannung von 29 V ausgebildet und ist z.B. ein Schaltnetzteil.

Die Akkuspannung der Akkumulatoreinheit 8 wird nun durch die Akkuspannungserfassungseinrichtung 25 ermittelt. Wenn die Netzversorgungseinrichtung 9 angeschlossen wird, wird dies mittels der Ladespeisespannungserfassungseinrichtung 26 erkannt. Liegt die Akkuspannung unterhalb eines bestimmten Sicherheitswertes, z.B. einer Minimalspannung U0 von 14 V, so wird kein Ladevorgang begonnen. Dies kann auch angezeigt bzw. gemeldet werden (nicht dargestellt).

Ein Anzeigen oder ein Melden derartiger Vorgänge, wie beispielsweise der Beginn, das Ende oder der Status eines Ladevorganges oder des Status der Akkumulatoreinheit 8 erfolgt durch eine Anzeigeeinrichtung oder durch eine Meldeeinrichtung, welche als Leuchte, beispielsweise als Leuchtdiode, oder als Akustikgeber, beispielsweise als Summer oder Piezopiepser, ausgebildet ist.

Liegt die Akkuspannung oberhalb der Minimalspannung, z.B. auf 22 V, und unterhalb der Ladeschlussspannung U3 29,4 V, so wird ein Ladevorgang mit einem bestimmten Ladestrom I entsprechend einer zu dem Akkumulatortyp einstellbaren Ladecharakteristik durchgeführt (diese Werte können in nicht gezeigter Weise an der Ladeeinrichtung 22 vorher eingestellt werden). Ein Ladestrom I beträgt z.B. 350 mA und wird von einem Zeitpunkt t0, in welchem bei der Ladestartspannung U1 mit dem Ladevorgang begonnen wird, bis zu einem Zeitpunkt t2, in dem die Ladeschlussspannung U3 erreicht ist, konstant gehalten. Wird die Ladeschlussspannung U3 von 29,4 V in dem Zeitpunkt t2 erreicht, wird diese Spannung konstant gehalten und der Ladestrom I im Verlauf des weiteren Ladevorganges entsprechend reduziert.

Die Ladespannung U steigt von der Ladestartspannung U1 vom Zeitpunkt t0 bis zum Zeitpunkt t1 an, in welchem die Nennspannung U2 erreicht wird, und steigt weiter bis zum Erreichen der Ladeschlussspannung U3 im Zeitpunkt t2 an.

Die Ladeeinrichtung 22 weist prinzipiell einen so genannten Hochsetzsteller auf, wenn der Akkumulator mit einer Ladespannung von größer als 29 V geladen werden kann bzw. wenn der Akkumulator mit einer Ladespannung, welche größer als die durch die Netzversorgungseinrichtung 9 bereitgestellte Versorgungsspannung ist, geladen werden kann. Dies ist ab dem Zeitpunkt t1 in dem Diagramm in Fig. 3 der Fall.

Vom Zeitpunkt t1 bis zum Zeitpunkt t2 wirkt die Ladeeinrichtung 22 als Hochsetzsteller, aber mit konstantem Ladestrom I, wohingegen sie ab dem Zeitpunkt t2 als Hochsetzsteller mit konstanter Ladespannung U wirkt.

Der Hochsetzsteller wirkt jedoch vom Zeitpunkt t0 bis zum Erreichen der Nennspannung U2 im Zeitpunkt t1 als ein so genannter Tiefsetzsteller und reduziert die Ladespannung U, während der Ladestrom I konstant gehalten wird.

Eine optionale Abschaltung der Ladespannung U, z.B. nach einer vorher festlegbaren Zeit, ist nicht dargestellt.

Wie eingangs beschrieben illustriert die Figur 3 den Kurvenverlauf des Ladestroms I, welcher bis zum Zeitpunkt t2 konstant bleibt. Die Figur 3 und die Figur 3a illustrieren ferner beispielhafte Kurvenverläufe des Ladestroms I nach dem Zeitpunkt t2.

Gemäß der Abbildung nach Figur 3 und gemäß einer ersten beispielhaften Ausführungsform einer Ladeeinrichtung 22 ist ein Diagrammverlauf des Ladestroms I nach dem Zeitpunkt t2 gegeben, wobei der Ladestrom I mit zunehmender Zeit sich mehr und mehr verringert und dadurch eine abfallende Kurve gegeben ist, welche einem absteigenden Parabelast ähnlich ist.

Gemäß der Abbildung nach Figur 3a und gemäß einer weiteren beispielhaften Ausführungsform einer Ladeeinrichtung 22 ist ein Diagrammverlauf des Ladestroms I nach dem Zeitpunkt t2 gegeben, wobei der Ladestrom I im Zeitpunkt t2 oder im Bereich um den Zeitpunkt t2 sehr rasch und steil abfällt, so dass der Kurvenverlauf im Zeitpunkt t2 oder im Bereich um den Zeitpunkt t2 knickartig abfallend ausgebildet ist. Im weiteren Zeitverlauf fällt der Ladestrom I zunächst noch steil ab, wobei sich im daran anschließenden Zeitverlauf der Ladestrom I einem vorbestimmten Wert, sozusagen einem Ladungserhaltungsstrom annähert. In einer Ausführung der Ladeeinrichtung 22 und der Akkumulatoreinheit 8 wird der Ladungserhaltungsstrom nie zu Null und nähert sich, z.B. asymptotisch, einem vorbestimmten Wert an. Gemäß einer anderen Ausführungsform und analog zu einer anderen eingangs beschriebenen Ausführungsform erfolgt durch ein Zeitschaltelement nach einer vorbestimmten Zeit eine Abschaltung der Ladespannung U, wobei dann der Ladestrom I ebenfalls zu Null wird.

Da die Netzversorgungseinrichtung 9 nur eine Maximalspannung von 29 V zur Verfügung stellt, arbeitet die Ladeeinrichtung 22 im Spannungsbereich von 29 V bis zur Ladeschlussspannung U3 von 29,4 als Hochsetzsteller.

Wird ein voreingestellter Ladestrom unterschritten (z.B. 1/40 bis 1/20 der Nominalkapazität des Akkumulators der Akkumulatoreinheit 8), so wird der Ladevorgang abgeschaltet. Alternativ kann nach einer voreingestellten Zeit abgeschaltet werden.

Ein selbsttätiges Nachladen erfolgt bei Unterschreiten der Akkuspannung von einem voreingestellten Wert von z.B. 27 V.

Die Ladeeinrichtung 22 und/oder die Kopplungsvorrichtung 10 weisen (nicht gezeigte) elektrische/elektronische Sicherungen auf.

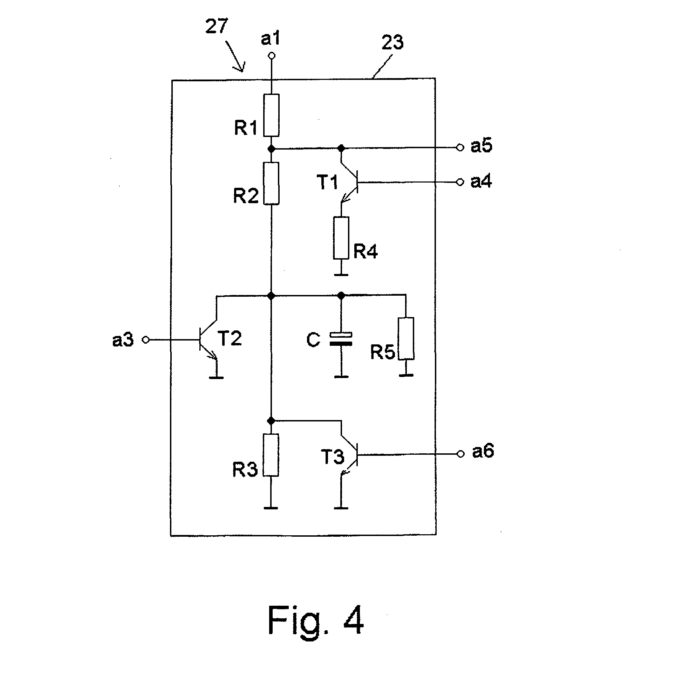

Die Referenzeinrichtung 23 ist in einer Ausführung diskret als Spannungsteiler 27 aufgebaut und in einem beispielhaften schematischen Schaltbild in Fig. 4 dargestellt.

Der Spannungsteiler 27 weist mindestens drei in Reihe geschaltete Widerstände R1, R2 und R3 auf, deren mittlere Verbindung den Anschluss a5 zur Verbindung mit der Ladeeinrichtung 22 (Fig. 2) bildet. Der andere Anschluss des Widerstands R1 ist als Anschluss a1 ausgeführt (Fig. 2) und das andere Ende des Widerstands R2 ist über den weiteren Widerstand R3 mit Masse verbunden.

Die mittlere Verbindung der Widerstände R1 und R2 mit dem Anschluss a5 ist über ein Schaltelement, hier ein Transistor T1, mit einem an Masse liegenden Widerstand R4 verbindbar. Der Eingang des Schaltelementes, d.h. die Basis des Transistors T1 bildet den Anschluss a4 (Fig. 2) für die Ladespeisespannungserfassung 26.

Der Transistor T1 ist als npn-Typ gezeigt, aber er kann z.B. auch ein pnp-Typ sein. Weiterhin ist es möglich, dass der Widerstand R4 in der Kollektorleitung des Transistors T1 angeordnet ist. Außerdem kann der Transistor T1 auch als einstellbarer Widerstand in Form eines MOS-FET ausgebildet sein. Andere Ausführungen, z.B. Kombinationen, sind natürlich auch möglich.

Der Verbindungspunkt zwischen dem Widerstand R2 und dem Widerstand R3 ist einerseits über ein weiteres Schaltelement, hier Transistor T2, mit Masse verbindbar und andererseits über einen Widerstand R5 und einen Kondensator C mit Masse verbunden. Die Basis des Transistors T2 bildet den Anschluss a3 (Fig. 2) für die mindestens eine Stromerfassungseinrichtung 24.

Weiterhin ist dieser Verbindungspunkt zwischen dem Widerstand R2 und dem Widerstand R3 über ein noch weiteres Schaltelement, hier Transistor T3, mit Masse verbindbar, z.B. für eine Strombegrenzung des Ladestroms I, wobei die Basis des Transistors T3 einen Anschluss a6 für einen noch weiteren Parameter für die Referenzeinrichtung 23 bildet, der unten noch erläutert wird.

Die Transistoren (Schaltelemente) T1, T2 und T3 beeinflussen den Spannungsteiler 27 dadurch, dass sie Widerstände des Spannungsteilers 27 überbrücken oder verändern, wodurch der Spannungswert am Referenzanschluss a5 gegen Masse verändert wird. Auf diese Weise können die unterschiedlichen Parameter Akkuspannung, Ladespeisespannung, Ladestrom Einfluss auf die Ladeeinrichtung 22 ausüben.

So kann ein Spannungswert an der Basis des Transistors T1 in Abhängigkeit von der Ladespeisespannung am Anschluss a4 den Widerstand R4 parallel zu den in Reihe geschalteten Widerständen R2 und R3 legen. Dadurch ist es auch möglich zu erkennen, ob die Netzversorgungseinrichtung 9 angeschlossen ist und Spannung liefert.

Transistor T2 kann anhand eines Spannungswertes am Anschluss a3 in Abhängigkeit vom Ladestrom den Widerstand R3 und R5 (der parallel zu R3 ist) überbrücken und somit R2 auf Masse legen.

Bei Anschluss der Netzversorgungseinrichtung 9 bildet der Kondensator C einen Kurzschluss zur Masse für einen von ihm abhängigen Zeitabschnitt, wodurch der Widerstand R5 und der Transistor T2 überbrückt werden. Damit kann ein Ladevorgang gestartet werden.

Der Kondensator C kann wiederum entladen werden, wenn der Transistor T3 durch ein Signal am weiteren Anschluss a6 auf Masse durchschaltet. Dies Signal kann z.B. durch einen bestimmten Spannungswert der Akkuspannung ausgelöst werden. Ferner ist mindestens einer der drei in Reihe geschalteten Widerstände R1, R2, R3 mit einem Kondensator C zur zeitweiligen Veränderung des Spannungsteilers verbunden.

Die oben beschriebenen Ausführungsbeispiele schränken die Erfindung nicht ein. Sie ist im Rahmen der beigefügten Ansprüche modifizierbar.

Die angegebenen Spannungswerte für Ladespannung U und Ladeschlussspannung U3 sind nur beispielhaft, sie können selbstverständlich andere Werte im Zusammenhang mit anderen Akkumulatortypen aufweisen.

So ist es denkbar, dass der Spannungsteiler 27 nicht durch Transistoren als Schaltelemente, sondern elektromechanische Schalter beeinflusst ist.

Anstelle des Spannungsteilers 27 können auch andere Aufbauten der Referenzeinrichtung 23 verwendet werden, z.B. vollintegrierte Schaltkreise.

Der Akkumulator der Akkumulatoreinheit 8 kann auch ein anderer Typ als Lithium-Ionen-Akkumulator sein, z.B. Blei-Gel-Akku, NiCd-Akku usw.

Wenn die Akkumulatoreinheit Akkumulatoren mit eigenen, integrierten Sicherheitsschaltungen mit Verbindungsanschlüssen aufweist, können diese mittels eines zusätzlichen Kabels an die Kopplungsvorrichtung 10 und deren Funktionseinheiten angeschlossen werden.

Des weiteren sei noch ein Vorteil der Kopplungsvorrichtung 10 als modular ausgebildete Baueinheit genannt, welche bei der Montage des elektromotorischen Möbelantriebs 1 im Möbel einfach und leicht montierbar ausgebildet ist und speziell für eine Gruppe gleicher oder ähnlicher Typen von Akkumulatoren, beispielsweise einer Gruppe Lithium-Ionen-Akkumulatoren und mit ähnlichem Speichervermögen, ausgelegt ist.

Die in den Figuren dargestellte Ausführungsform weist in beispielhafter Weise eine gemeinsame Minusleitung auf, welche wenigstens der Motorsteuerung 6 und der Akkumulatoreinheit 8, aber auch der Netzversorgungseinrichtung 9 zugeordnet ist, während dessen jeweilige Plusleitung mit Dioden und/oder zumindest der Ladeeinrichtung 22 wirksam verbunden ist. In dessen elektrischem Umkehrschluss weist eine andere nicht näher dargestellte Ausführungsform eine gemeinsame Plusleitung auf, welche wenigstens der Motorsteuerung 6 und der Akkumulatoreinheit 8, aber auch der Netzversorgungseinrichtung 9 zugeordnet ist, während dessen jeweilige Minusleitung mit Dioden und/oder zumindest der Ladeeinrichtung 22 wirksam verbunden ist.

### Bezugszeichen liste

- 1: Elektromotorischer Möbelantrieb
- 2: Linearantrieb
- 3: Hubrohr
- 4: Gabelkopf
- 5: Elektromotor
- 6: Motorsteuerung
- 7: Handbedienung
- 8: Akkumulatoreinheit
- 9: Netzversorgungseinrichtung
- 10: Kopplungsvorrichtung
- 11: Netzstecker
- 12: Netzleitung
- 13: Versorgungsleitung
- 14: Akkuleitung
- 15: Speiseleitung
- 16: Handbedienungsleitung
- 17: Masseleitung
- 18: Plusleitung
- 19: Akkuplusleitung
- 20: Ladespeiseleitung
- 21: Ladeleitung
- 22: Ladeeinrichtung
- 23: Referenzeinrichtung
- 24: Stromerfassungseinrichtung
- 25: Akkuspannungserfasssungseinrichtung
- 26: Ladespeisespannungserfassungeinrichtung
- 27: Spannungsteiler
- 28: Motorleitung
- a 1...6: Anschluss
- C: Kondensator
- D1...2: Diode
- D3: Begrenzerdiode
- I: Ladestrom
- R1...5: Widerstand
- T1...3: Transistor
- t, t0, t1, t2: Zeit
- U: Ladespannung
- U0: Minimalspannung
- U1: Ladestartspannung
- U2: Nennspannung
- U3: Ladeschlussspannung
- V1...3: Verbindungsanschluss

## Patentansprüche

1. Elektromotorischer Möbelantrieb (1), insbesondere Sitz-/Liegemöbelantrieb, mit einer Motorsteuerung (6), einer Handbedienung (7), einer Akkumulatoreinheit (8) und mit einer Netzversorgungseinrichtung (9) zum Verstellen von beweglichen Möbelbauteilen relativ zueinander,
wobei der elektromotorische Möbelantrieb (1) wenigstens einen drehrichtungsumkehrbaren Elektromotor aufweist, wobei jedem Elektromotor ein Drehzahlreduziergetriebe nachgeschaltet ist und wobei jedem Drehzahlreduziergetriebe ein weiteres Getriebe nachgeschaltet ist,
wobei die Akkumulatoreinheit (8) mindestens einen Akkumulator aufweist, und wobei die Netzversorgungseinrichtung (9) mit dem Netz verbindbar ausgebildet ist und die netzseitige Eingangsspannung in mindestens eine ausgangsseitige Kleinspannung transformiert, und einen Trenntransformator oder eine Übertragungseinheit zur galvanischen Trennung zwischen der netzgebundenen Eingangsseite und der kleinspannungsgebenden Ausgangsseite zum Betrieb des elektromotorischen Möbelantriebs (1) und zur Aufladung des mindestens einen Akkumulators aufweist, wobei eine Kopplungsvorrichtung (10) vorgesehen ist, welche die Akkumulatoreinheit (8) mit der Netzversorgungseinrichtung (9) verbindet, und welche eine Ladeeinrichtung (22) zur Aufladung des mindestens einen Akkumulators der Akkumulatoreinheit (8) aufweist,
**dadurch gekennzeichnet, dass**
die Kopplungsvorrichtung (10) die Motorsteuerung (6) zu ihrer Versorgung mit der Akkumulatoreinheit (8) und der Netzversorgungseinrichtung (9) verbindet.

2. Elektromotorischer Möbelantrieb (1) nach Anspruch 1, **dadurch gekennzeichnet, dass** die Kopplungsvorrichtung (10) eine Referenzeinrichtung (23) umfasst, welche mit der Ladeeinrichtung (22) verbunden ist.

3. Elektromotorischer Möbelantrieb (1) nach Anspruch 2, **dadurch gekennzeichnet, dass** die Referenzeinrichtung (23) mit mindestens einer Stromerfassungseinrichtung (24), einer Akkuspannungserfassungseinrichtung (25) und einer Ladespeisespannungserfassungseinrichtung (26) verbunden ist.

4. Elektromotorischer Möbelantrieb (1) nach Anspruch 2 oder 3, **dadurch gekennzeichnet, dass** die Referenzeinrichtung (23) einen Spannungsteiler (27) aufweist.

5. Elektromotorischer Möbelantrieb (1) nach Anspruch 4, **dadurch gekennzeichnet, dass** der Spannungsteiler (27) mindestens drei in Reihe geschaltete Widerstände (R1, R2, R3) aufweist.

6. Elektromotorischer Möbelantrieb (1) nach Anspruch 5, **dadurch gekennzeichnet, dass** die mindestens drei in Reihe geschalteten Widerstände (R1, R2, R3) mit Schaltelementen (T1, T2, T3) verbunden sind, durch welche mindestens einer der drei in Reihe geschalteten Widerstände (R1, R2, R3) veränderbar ist.

7. Elektromotorischer Möbelantrieb (1) nach Anspruch 5 oder 6, **dadurch gekennzeichnet, dass** mindestens einer der drei in Reihe geschalteten Widerstände (R1, R2, R3) mit einem Kondensator (C) zur zeitweiligen Veränderung des Spannungsteilers verbunden ist.

8. Elektromotorischer Möbelantrieb (1) nach einem der vorhergehenden Ansprüche, **dadurch gekennzeichnet, dass** die Ladeeinrichtung (22) nach Art eines Schaltnetzteils ausgebildet ist.

9. Elektromotorischer Möbelantrieb (1) nach Anspruch 8, **dadurch gekennzeichnet, dass** die Ladeeinrichtung (22) sowohl als Tiefsetzsteller als auch als Hochsetzsteller betreibbar ist.

10. Elektromotorischer Möbelantrieb (1) nach Anspruch 9, **dadurch gekennzeichnet, dass** die Ladeeinrichtung (22) als Tiefsetzsteller zur Reduzierung einer Ladespannung (U) des mindestens einen Akkumulators der Akkumulatoreinheit (8), während der Ladestrom I konstant gehalten wird, betreibbar ist, und dass die Ladeeinrichtung (22) als Hochsetzsteller mit einem konstantem Ladestrom (I) für den mindestens einen Akkumulator der Akkumulatoreinheit (8) bis zum Erreichen einer Ladeschlussspannung (U3) des mindestens einen Akkumulators der Akkumulatoreinheit (8) mit konstantem Ladestrom (I) betreibbar ist, wohingegen die Ladeeinrichtung (22) als Hochsetzsteller mit einer konstanten Ladespannung (U) ab Erreichen der Ladeschlussspannung (U3) des mindestens einen Akkumulators der Akkumulatoreinheit (8) betreibbar ist.

11. Elektromotorischer Möbelantrieb (1) nach einem oder mehreren der vorgenannten Ansprüche, **dadurch gekennzeichnet, dass** die Kopplungsvorrichtung (10) steckbare Anschlüsse zumindest für die Akkumulatoreinheit (8) und die Netzversorgungseinrichtung (9) aufweist.

12. Elektromotorischer Möbelantrieb (1) nach einem oder mehreren der vorgenannten Ansprüche, **dadurch gekennzeichnet, dass** die Netzversorgungseinrichtung (9) mit einem Schaltnetzteil ausgebildet ist.

13. Elektromotorischer Möbelantrieb (1) nach einem oder mehreren der vorgenannten Ansprüche, **dadurch gekennzeichnet, dass** die Netzversorgungseinrichtung (9) eine Netzfreischaltungseinrichtung aufweist.

## Claims

1. An electromotive furniture drive (1), especially a seating/reclining furniture drive, comprising a motor controller (6), a manual control (7), a rechargeable battery unit (8) and a mains power supply device (9) for adjusting movable furniture components relative to each other,
wherein the electromotive furniture drive (1) comprises at least one electric motor with reversibility in the direction of rotation, wherein each electric motor is provided downstream with a speed reduction gear and wherein each speed reduction gear is provided downstream with a further gear,
wherein the rechargeable battery unit (8) comprises at least one rechargeable battery, and wherein the mains power supply device (9) is arranged to be connectable to the mains and the input voltage on the mains side is transformed into at least one low voltage on the output side, and comprises an isolating transformer or a transformer unit for electrical isolation between the mains-bound input side and the low-voltage-providing output side for the operation of the electromotive furniture drive (1) and for charging the at least one rechargeable battery, wherein a coupling apparatus (10) is provided which connects the rechargeable battery unit (8) to the mains power supply device (9) and which comprises a charging device (22) for charging the at least one rechargeable battery of the rechargeable battery unit (8),
**characterized in that**
the coupling apparatus (10) connects the motor controller (6) to the rechargeable battery unit (8) and the mains power supply device (9).

2. An electromotive furniture drive (1) according to claim 1, **characterized in that** the coupling apparatus (10) comprises a reference device (23) which is connected to the charging device (22).

3. An electromotive furniture drive (1) according to claim 2, **characterized in that** the reference device (23) is connected to at least one current detection device (24), a rechargeable battery voltage detection device (25) and a charging supply voltage detection device (26).

4. An electromotive furniture drive (1) according to claim 2 or 3, **characterized in that** the reference device (23) comprises a voltage divider (27).

5. An electromotive furniture drive (1) according to claim 4, **characterized in that** the voltage divider (27) comprises at least three resistors (R1, R2, R3) which are switched in series.

6. An electromotive furniture drive (1) according to claim 5, **characterized in that** the at least three resistors (R1, R2, R3) which are switched in series are connected to switching elements (T1, T2, T3), by means of which at least one of the three resistors (R1, R2, R3) switched in series can be changed.

7. An electromotive furniture drive (1) according to claim 5 or 6, **characterized in that** at least one of the three resistors (R1, R2, R3) switched in series is connected to a capacitor (C) for temporarily changing the voltage divider.

8. An electromotive furniture drive (1) according to one of the preceding claims, **characterized in that** the charging device (22) is arranged in the manner of a switched-mode power supply unit.

9. An electromotive furniture drive (1) according to claim 8, **characterized in that** the charging device (22) can be operated both as a step-down converter and also as a step-up converter.

10. An electromotive furniture drive (1) according to claim 9, **characterized in that** the charging device (22) can be operated as a step-down converter for reducing the charging voltage (U) of the at least one rechargeable battery of the rechargeable battery unit (8) while the charging current (I) is kept constant, and the charging device (22) can be operated as a step-up converter with a constant charging current (I) for the at least one rechargeable battery of the rechargeable battery unit (8) until reaching an end-of charge voltage (U3) of the at least one rechargeable battery of the rechargeable battery unit (8) with constant charging current (I), whereas the charging device (22) can be operated as a step-up converter with a constant charging voltage (U) from reaching the end-of-charge voltage (U3) of the at least one rechargeable battery of the rechargeable battery unit (8).

11. An electromotive furniture drive (1) according to one or several of the preceding claims, **characterized in that** the coupling apparatus (10) comprises plug-in connections at least for the rechargeable battery unit (8) and the mains power supply device (9).

12. An electromotive furniture drive (1) according to one or several of the preceding claims, **characterized in that** the mains power supply device (9) is arranged with a switched-mode power supply unit.

13. An electromotive furniture drive (1) according to one or several of the preceding claims, **characterized in that** the mains power supply device (9) comprises a mains isolation device.

## Revendications

1. Entraînement de meuble à moteur électrique (1), en particulier entraînement de siège ou de meuble de couchage, avec une commande de moteur (6), une unité de commande manuelle (7), une unité d'accumulation (8) et une installation d'alimentation par le secteur (9), pour le déplacement de parties de meuble mobiles les unes par rapport aux autres,
lequel entraînement de meuble à moteur électrique (1) comprend au moins un moteur électrique à sens de rotation inversable, chaque moteur électrique étant associé à un engrenage réducteur et chaque engrenage réducteur étant suivi d'un autre engrenage,
dans lequel l'unité d'accumulation (8) comprend au moins un accumulateur et dans lequel l'installation d'alimentation par le secteur (9) est conformée de façon à pouvoir être connectée au secteur, la tension d'entrée du côté du secteur étant transformée en au moins une basse tension en sortie, et comprend un transformateur de séparation ou une unité de transmission pour la séparation galvanique entre le côté d'entrée connecté au secteur et le côté de sortie délivrant une basse tension pour faire fonctionner l'entraînement de meuble à moteur électrique (1) et charger l'au moins un accumulateur, un dispositif de couplage (10) étant prévu qui relie l'unité d'accumulation (8) à l'installation d'alimentation par le secteur (9) et qui comporte une installation de chargement (22) pour charger l'au moins un accumulateur de l'unité d'accumulation (8),
**caractérisé en ce que** le dispositif de couplage (10) relie la commande de moteur (6), en vue de son alimentation, à l'unité d'accumulation (8) et à l'installation d'alimentation par le secteur (9).

2. Entraînement de meuble à moteur électrique (1) selon la revendication 1, **caractérisé en ce que** le dispositif de couplage (10) comprend une installation de référence (23) qui est couplée à l'installation de chargement (22).

3. Entraînement de meuble à moteur électrique (1) selon la revendication 2, **caractérisé en ce que** l'installation de référence (23) est reliée à au moins une installation de détection de l'intensité (24), une installation de détection de la tension de l'accumulateur (25) et une installation de détection de la tension d'alimentation du chargement (26).

4. Entraînement de meuble à moteur électrique (1) selon la revendication 2 ou 3, **caractérisé en ce que** l'installation de référence (23) présente un diviseur de tension (27).

5. Entraînement de meuble à moteur électrique (1) selon la revendication 4, **caractérisé en ce que** le diviseur de tension (27) présente au moins trois résistances (R1, R2, R3) montées en série.

6. Entraînement de meuble à moteur électrique (1) selon la revendication 5, **caractérisé en ce que** les au moins trois résistances (R1, R2, R3) montées en série sont reliées à des éléments de commutation (T1, T2, T3) par lesquels au moins une des trois résistances (R1, R2, R3) montées en série peut être modifiée.

7. Entraînement de meuble à moteur électrique (1) selon la revendication 5 ou 6, **caractérisé en ce qu'**au moins une des trois résistances (R1, R2, R3) montées en série est reliée à un condensateur (C) pour modifier temporairement le diviseur de tension.

8. Entraînement de meuble à moteur électrique (1) selon l'une des revendications précédentes, **caractérisé en ce que** l'installation de chargement (22) est construite comme un bloc d'alimentation secteur.

9. Entraînement de meuble à moteur électrique (1) selon la revendication 8, **caractérisé en ce que** l'installation de chargement (22) peut fonctionner aussi bien comme un dévolteur que comme un survolteur.

10. Entraînement de meuble à moteur électrique (1) selon la revendication 9, **caractérisé en ce que** l'installation de chargement (22) peut fonctionner comme un dévolteur pour réduire une tension de charge (U) de l'au moins un accumulateur de l'unité d'accumulation (8) tandis que l'intensité de charge (I) est maintenue constante, et **en ce que** l'installation de chargement (22) peut fonctionner comme un survolteur avec une intensité de charge (I) constante pour l'au moins un accumulateur de l'unité d'accumulation (8) jusqu'à ce qu'une tension de charge finale (U3) de l'au moins un accumulateur de l'unité d'accumulation (8) soit atteinte avec une intensité de charge (I) constante, alors que l'installation de chargement (22) peut fonctionner comme un survolteur avec une tension de charge (U) constante à partir du moment où la tension de charge finale (U3) de l'au moins un accumulateur de l'unité d'accumulation (8) est atteinte.

11. Entraînement de meuble à moteur électrique (1) selon une ou plusieurs des revendications précédentes, **caractérisé en ce que** le dispositif de couplage (10) comporte des branchements enfichables au moins pour l'unité d'accumulation (8) et l'installation d'alimentation par le secteur (9).

12. Entraînement de meuble à moteur électrique (1) selon une ou plusieurs des revendications précédentes, **caractérisé en ce que** l'installation d'alimentation par le secteur (9) est construite comme un bloc d'alimentation secteur.

13. Entraînement de meuble à moteur électrique (1) selon une ou plusieurs des revendications précédentes, **caractérisé en ce que** l'installation d'alimentation par le secteur (9) présente une installation de déconnexion du secteur.
